# EUROPEAN PATENT SPECIFICATION

(11) **EP 2 258 011 B1**
(45) Date of publication and mention of the grant of the patent: **02.12.2015**
(21) Application number: 09720389.7
(22) Date of filing: 16.03.2009
(51) Int. Cl.: H01M 2/10

(54) **REMOVABLE BATTERY PACK WITH LATCHING MECHANISM**
ENTNEHMBARE BATTERIEPACKUNG MIT VERRIEGEUNGSMECHANISMUS
BLOC DE BATTERIE AMOVIBLE AVEC MÉCANISME DE VERROUILLAGE

(30) Priority: 14.03.2008 US 36732
(43) Date of publication of application: 08.12.2010
(73) Proprietor: Royal Appliance Mfg. Co., Glenwillow, OH 44139 (US)
(72) Inventor: GEE, Jack, W., Willoughby OH 44094 (US); BUTTS, Mark, Akron OH 44334 (US); HORVATH, Jamie, Twinsburg OH 44087 (US); RUKAVINA, Doug, Massillon OH 44646 (US)
(74) Representative: Holmes, Matthew Peter
(86) International application number: PCT/US2009/037309
(87) International publication number: WO 2009/114867

(56) References cited:
- US-A- 4 632 201
- US-A- 5 004 276
- US-A- 5 899 763
- US-A1- 2004 070 367
- US-A1- 2007 243 458
- US-B1- 6 181 032

## Description

The present disclosure generally relates to removable battery packs, and more particularly to a removable battery pack having an improved latching mechanism. In particular to one embodiment, a battery pack having an improved latching mechanism is removably disposed in a cleaning appliance with a suction motor impeller assembly (e.g., a stick-type or hand held portable type vacuum cleaner) for powering same. Though the present disclosure will describe a removable battery pack particularly in association with a suction force cleaner, it is to be appreciated that the subject matter described herein has broader applications and may be advantageously employed in related environments and applications (e.g., for use in other powered devices including power tools, radios, power sprayers and the like).

### TECHNICAL CONSIDERATIONS

Removable battery packs have been provided in a wide variety of configurations for use with an infinite number of consumer products. As might be expected, there are many different types of battery latching mechanisms for securing removable battery packs to their respective electric powered devices. At least some of these are claimed to allow for easy removal and installation of the battery packs. These are often competing considerations in the design of a particular battery pack and/or a particular powered device that receives and is powered by the battery pack. A further competing consideration is the constant desire to provide battery packs, and devices powered thereby, at a lower cost without degrading the experience of the consumer in using the battery pack together with its powered device (or devices).

Much attention has been given to the design of removable battery packs for certain categories of consumer products. For example, the art is crowded with many removable battery pack designs and configurations for power tools (e.g., cordless drills and saws). One such example is described in US2007/243458, which discloses a holding means comprising a flexion spring contained within a base body of a battery pack for an electrical appliance. Similarly, much attention has been given to removable battery packs for more sophisticated electronic devices, such as computers, portable DVD players and the like. However, relatively little attention has been paid to the removable battery packs for other types of more common consumer devices, such as suction force cleaners having a suction motor and impeller or fan assembly commonly referred to as vacuum cleaners. For Instead, for example, latching mechanisms for these other types of consumer devices seem to have been more of an afterthought. Often, for these devices, little attention is given to designing a battery pack latching mechanism that provides proper securing of the battery pack to the consumer device it is to power, while ensuring that the battery pack is easily attached and detached from its consumer device.

### SUMMARY

According to the present invention there is provided a latching assembly for securing a battery package to an electrically powered cleaning device, the latching assembly comprising: at least one moveable first engagement member, located toward a first side of a long end of the battery package and configured for movement between an engaged position to thereby secure the battery package to a cleaning device and an unengaged position for removal of the battery package from a cleaning device; and at least one user contact movably mounted to the battery package for movement of the first engagement member between the engaged position and the unengaged position; characterised by at least one rod having a longitudinal axis movably mounted to the battery package to interface with the first engagement member; wherein the user contact is located toward a second side of the long end of the battery package opposite the first side; and the user contact is configured to interface with the rod for movement of the rod to move the first engagement member between the engaged position and the unengaged position.

In one configuration, axial movement of the push rod can occur along a first axis and movement of the latch between the latched position and the unlatched position can occur along a second axis. In one embodiment, the second axis can be oriented approximately normal relative to the first axis. If desired, a tapered engagement can be provided between the push rod and the latch to translate movement of the push rod along the first axis to movement of the latch along the second axis.

In one embodiment, the push rod can be movable between a first or retracted position and a second or protruding position. Movement of the push rod from the first retracted position to the second protruding position can move the latch from the latched position to the unlatched position. In the second protruding position, the push rod can extend from the housing for ejecting the housing from an associated device in which the housing is received for powering thereof. If desired, the push rod can be urged toward the first retracted position by a biasing element. Also, if desired, the associated device from which the push rod can eject the housing can be a vacuum cleaner and the one of more batteries contained in the housing can be used to power the vacuum cleaner.

In any of the foregoing configurations or a separate configuration, a distal end of the lever relative to a pivotal connection of the lever to the housing can be pulled to drive the push rod axially downward to move the latch from the latched position inward into the housing to the unlatched position.

Also disclosed is a vacuum cleaner having a removable battery pack. More particularly, the vacuum cleaner includes a housing having a suction inlet. A suction source is disposed within the vacuum cleaner housing for creating a suction source at the suction inlet. A battery pack housing is removably mounted within the vacuum cleaner housing. One or more batteries are disposed within the battery pack housing for powering the suction source. A latching mechanism includes a lever pivotally mounted to the battery pack housing, a push rod movably mounted to the battery pack housing so as to be axially movable by the lever, and a latch urged to a latched position wherein the latch locks the battery pack to the vacuum cleaner housing. An engagement between the push rod and the latch causes the latch to move to an unlatched position from the latched position when the push rod is sufficiently axially moved by the lever.

In one configuration, a full stroke of the lever can cause the push rod to move the latch to the unlatched position and to protrude from the battery pack housing to eject the battery pack housing from the vacuum cleaner housing.

Also disclosed is a removable battery pack for a powered device. More particularly the removable battery pack includes a battery pack housing removably mounted within the powered device for providing power thereto. A latching mechanism includes a lever pivotally mounted to the battery pack housing. A push rod is movably mounted to the battery pack housing so as to be axially movable from a first position to a second position upon stroking of the lever. A latch locks the battery pack within the powered device when in a latched position. The latch is movable from the latched position to an unlatched position allowing the battery pack housing to be removed from the powered device upon the push rod being moved axially from the first position to the second position.

In one configuration, the push rod, when in the second position, can protrude from the battery pack housing. In this configuration, movement of the push rod from the first position to the second position helps to eject the battery pack from the powered device.

Also disclosed is a method for removing a battery pack from a powered device. More particularly, a lever that is pivotally mounted on the battery pack is pulled or stroked. A push rod that is slidably disposed on the battery pack is axially advanced. Due to a mechanical linkage between the lever and the push rod, pulling of the lever causes axial advancement of the push rod. A latch that is slidably disposed on the battery pack is retracted to release the battery pack from the powered device. Specifically, due to a mechanical arrangement between the latch and the push rod, advancing of the push rod causes retraction of the latch. In one configuration, an ejection of the battery pack from the powered device is assisted by the push rod protruding from the battery pack upon axial advancement thereof.

### BRIEF DESCRIPTION OF THE DRAWINGS

FIGURE 1A is a perspective view of a removable battery pack having a release lever, the release lever shown in an actuated or pulled position.
FIGURE 1B is another perspective view of the removable battery pack of FIGURE 1 showing a latch in a retracted or unlatched position and a push rod in an extended or protruding position.
FIGURE 2 is a perspective view of the removable battery pack seated on a recharging base.
FIGURE 3A is a perspective view of a vacuum cleaner having a receptacle for receipt of the battery pack.
FIGURE 3B is a front view of a vacuum cleaner having a battery pack removably disposed in the receptacle for powering the vacuum cleaner.
FIGURE 4 is a side elevation schematic view of the battery pack.
FIGURE 5 is an end elevation schematic view of the battery pack.
FIGURE 6 is an enlarged partial cross-section view of the battery pack shown in Figure 5 showing an interface between a spring-biased push rod and a spring-biased latch.
FIGURE 7A is an underside perspective view of the removable battery pack showing the latch in a locking or latched position and the push rod in a retracted position.
FIGURE 7B is partial underside perspective view of the removable battery pack showing the latch in the retracted position and the push rod in the protruding position.
FIGURE 8A is a perspective view of the battery pack shown with a first cover removed to illustrate the longitudinal extent of the push rod and the batteries carried within the battery pack.
FIGURE 8B is another perspective view of the battery pack shown with a second, opposite cover removed, the first and second covers together forming a housing of the battery pack.
FIGURE 9A is an enlarged partial perspective view of the battery pack shown with the first cover removed to illustrate the lever in a normal resting position and the push rod in the retracted position.
FIGURE 9B is another partial perspective view of the battery pack shown with the first cover removed to illustrate the lever in the pulled position, which causes the push rod to be in the protruding position.
FIGURE 10 is a perspective view of a hand held portable suction cleaner with the removable battery in the battery receiving opening and well.
FIGURE 11 is a rear view of the hand held portable suction cleaner of Figure 10 with the removable battery in the battery receiving opening and well.

### DETAILED DESCRIPTION

In the description unless otherwise indicated, all numbers expressing quantities of dimensions, physical characteristics, and so forth used in the specification and claims are to be understood as being modified in all instances by the term "about". Accordingly, unless indicated to the contrary, the numerical values set forth in the following specification and claims may vary depending upon the desired properties sought to be obtained in the present disclosure. At the very least, and not as an attempt to limit the application of the doctrine of equivalents to the scope of the claims, each numerical value should at least be construed in light of the number of reported significant digits and by applying ordinary rounding techniques. Moreover, all ranges disclosed herein are to be understood to encompass the beginning and ending range values and any and all sub-ranges subsumed therein. For example, a stated range of "1 to 10" should be considered to include any and all sub-ranges-between (and inclusive of) the minimum value of 1 and the maximum value of 10; that is, all sub-ranges beginning with a minimum value of 1 or more and ending with a maximum value of 10 or less, e.g., 5.5 to 10. Also as used herein, spatial or directional terms in regards to the position such as "left", "right", "inner", "outer", "above", "below", "top", "bottom" "over", "on", "side", "front", "back" and the like have their standard dictionary meanings.

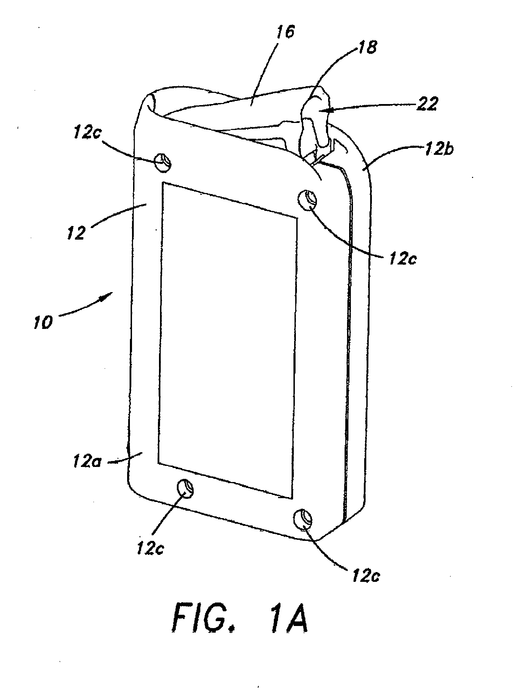

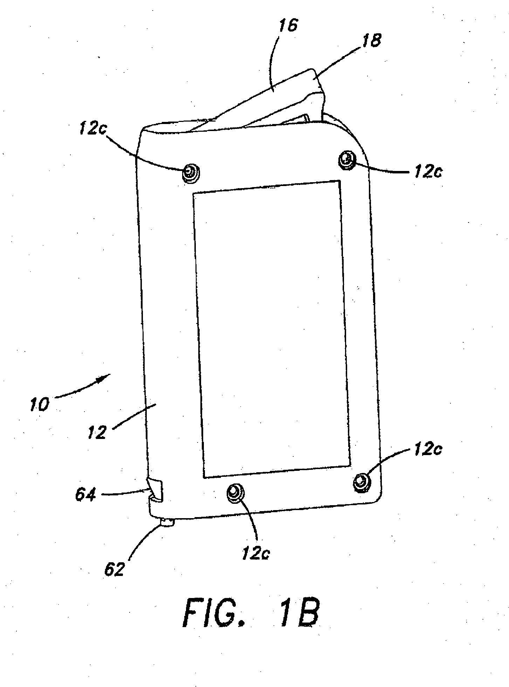

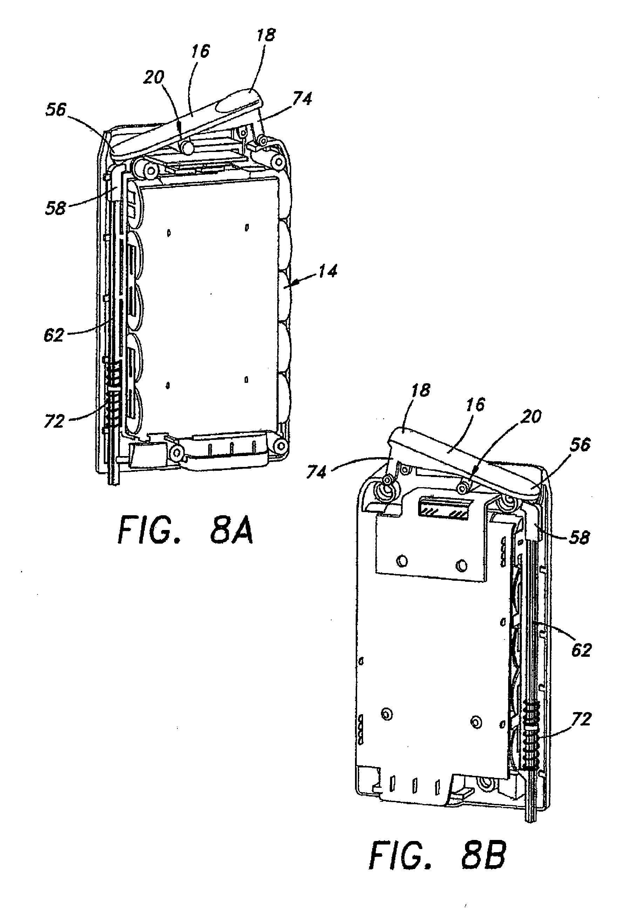

Referring now to the drawings, wherein the showings are for purposes of illustrating one or more exemplary embodiments of the present disclosure, FIGURES 1A and 1B show a removable battery pack 10 for a powered device. The battery pack 10 includes a housing 12 and one or more batteries 14 (FIGURE 8A) disposed within the housing 12. The housing 12 can be formed of a first shell or member 12a and a second shell or member 12b, with the members 12a, 12b held together by suitable fasteners 12c (e.g., screws). As will be understood and appreciated by those skilled in the art upon reading the present disclosure, a lever 16 is pivotally mounted to the housing 12 for enabling removal of the battery pack 10 from a powered device in which it is received for powering thereof.

In particular, as will be described in more detail below, a one end 18 of the lever 16, which is spaced apart relative to a pivotal connection 20 of the lever 16 to the housing 12 (see FIGURES 8A-9B), is pullable to unlatch the battery pack 10 from a powered device in which it is received and/or to eject the battery pack 10 from the device in which it is received. The lever 16 can have a movement angle about the pivot point 20 of from greater than one degree to less than 180 degrees and more suitably from 5 to less than 90 degrees. As illustrated, the end 18 of the lever 16 can be formed as a raised portion adjacent a recess 22, the raised formation of the end 18 and the recess 22 appropriately sized to receive a user's finger for pivotal lifting of the lever 16, particularly lifting of the end 18 thereof.

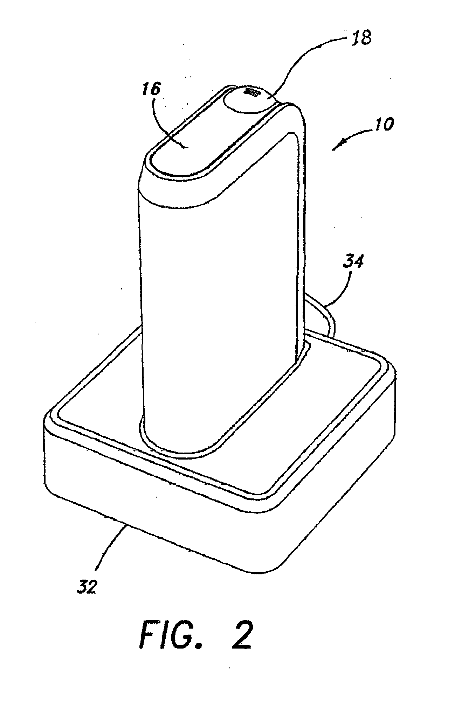

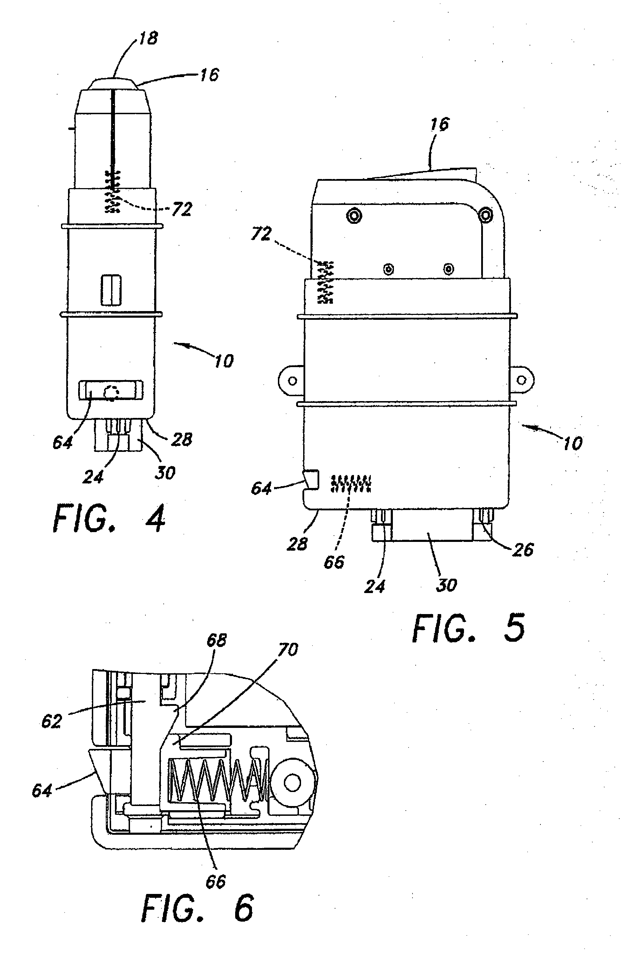

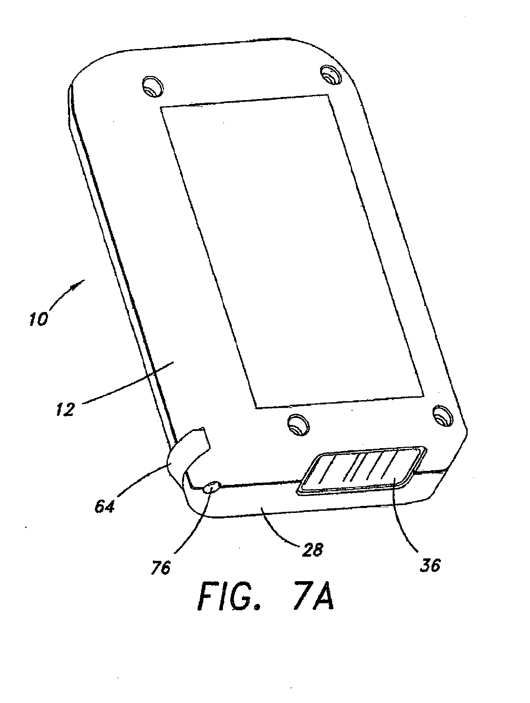

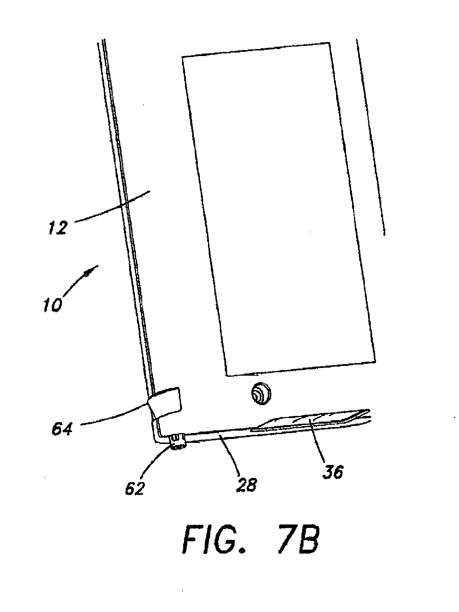

As is known and understood by those skilled in the art, the battery pack 10 can include appropriate positive and negative terminal connections for electrically connecting the battery pack 10, and specifically the one or more batteries 14 thereof, to suitable electrical components of a powered device. In one arrangement, as illustrated in FIGURES 4 and 5, the electrical connections 24, 26 can extend from a bottom side 28 of the battery pack housing 12 and be provided adjacent a supporting structure 30 of the housing 12 for providing structural protection to the terminal connections 24, 26. Alternatively, as shown in FIGURES 7A and 7B, the terminal electrical connections can be provided through an interface 36 that is slightly recessed within the housing 12 and thereby structurally protected or supported. With reference to FIGURE 2, the removable battery pack 10 can be received on a charging base 32 for recharging of the one or more batteries 14 of the battery pack 10. The recharging base 32 can be constructed as is well known by those of skill in the art so as to receive electrical power through a conventional power cord 34 and convert the same into appropriate DC power to be received and stored by the one or more batteries 14 for subsequent powering of a powered device.

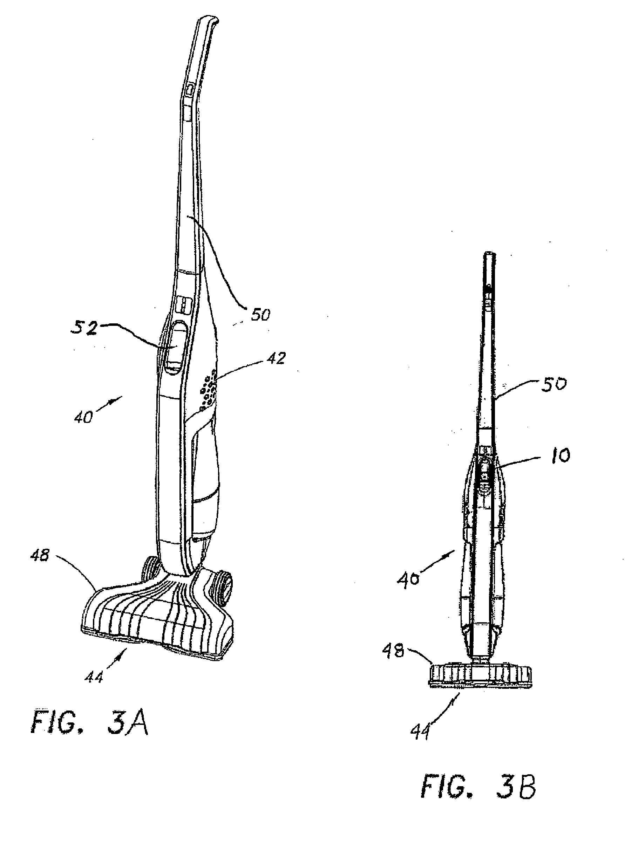

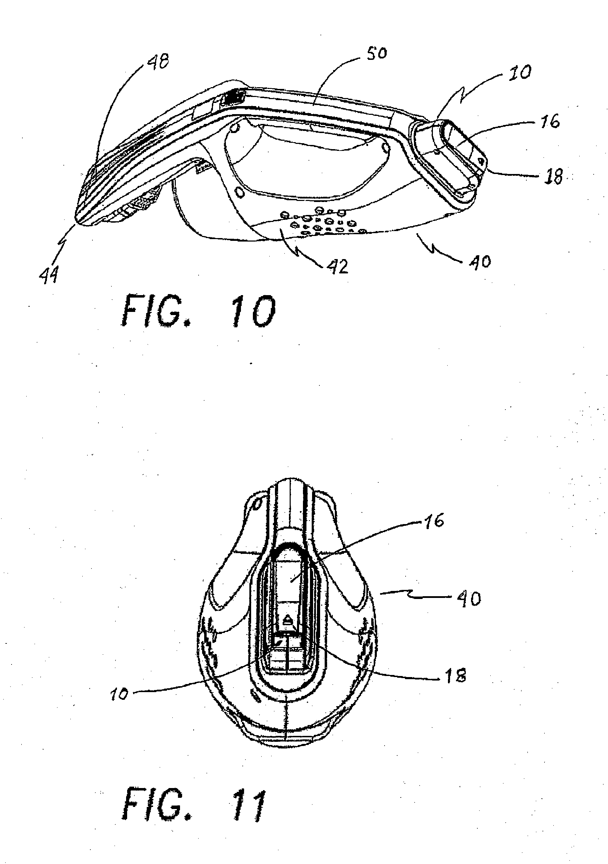

The removable battery pack 10 can be used with a variety of powering devices configured to receive the battery pack 10 and receive power therefrom. For example, with reference to FIGURES 3A, 3B, 10 and 11, the battery pack 10 can be used in association with a powered device, such as an electrically powered cleaning device such as a vacuum cleaner 40. As is conventional, the vacuum cleaner 40 includes a vacuum cleaner housing 42 having a suction inlet 44. A suction source (not shown) is disposed within the vacuum cleaner housing 42 for creating a vacuum at the suction inlet 44, as is known and understood by those skilled in the art. The vacuum cleaner 40 of the illustrated embodiment of FIGURES 3A and 3B for a stick-type vacuum cleaner wherein the housing 42 includes a nozzle base portion 48 disposed at a lower end, pivotally connected to an elongated handle portion 50. The nozzle portion 48 includes the suction inlet 44 defined therein and the handle portion 50 can house the motor/fan assembly forming the suction source. For a hand held vacuum cleaner as shown in FIGURES 10 and 11 the handle 50 is integrated into the unit but the nozzle 48 with nozzle inlet 44, suction fan assembly and removable battery 10 can be arranged in the body or housing 42.

The battery pack 10 can be removably mounted to or within the vacuum cleaner 40. In other words the battery pack 10 can be mounted either in the nozzle base 48 or in the handle portion 50. The mounting in FIGURE 3A can be in the opening and well 52 as shown in FIGURE 3B. The one or more batteries 14 disposed within the battery pack housing 12 can be used for powering the suction source of the vacuum cleaner 40. When the one or more batteries 14 have lost some or all of their charge, the battery pack 10 can be removed from the vacuum cleaner 40 and mounted on the recharging base 32 for recharging of the one or more batteries 14.

With reference now to FIGURES 4-9B, the battery pack 10 can include a latching mechanism comprised of the lever 16 pivotally mounted to the battery pack housing 12, a push rod 62 movably mounted to the battery pack housing 12 and a latch 64 movably mounted to the battery pack housing 12. As will be described in more detail below, the push rod 62 is adapted to be axially moved by the lever 16 and the latch 64 is adapted to be moved radially from a latched position to an unlatched position by the push rod 62 when the push rod is axially moved by the lever 16. In the latched position, the latch 64 can Sock the battery pack 10 within its power device (e.g., vacuum cleaner 40).

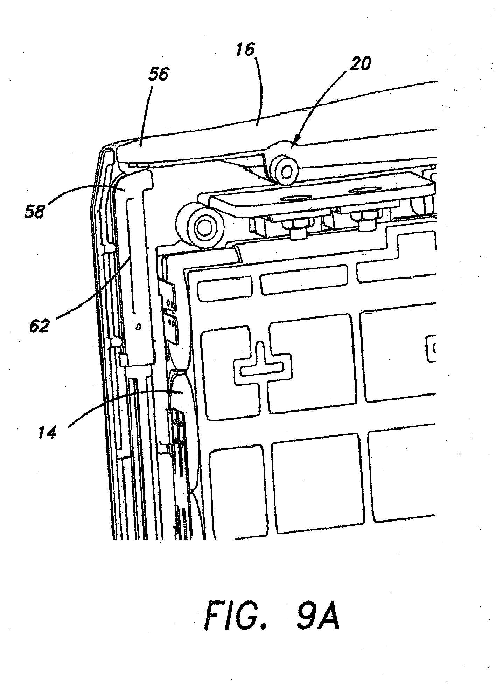

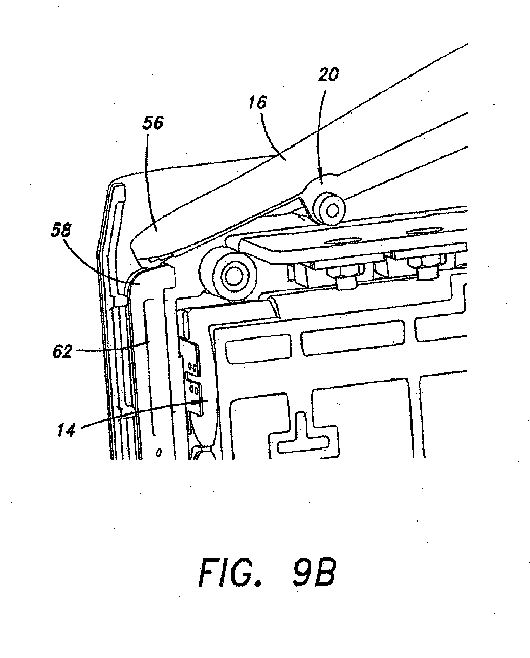

The latch 64 is movable from its latched position (FIG. 9A) to its unlatched position (FIG. 9B) allowing the battery pack housing 12 to be removed from its powered device, when the push rod 62 is moved axially from a first position to a second position. In particular, the push rod 62 is movable from its first position to its second position upon stroking of the lever 16 (i.e., fully lifting the end 18 of the lever 16.) With specific reference to FIGURES 9A and 9B, lifting end 18 of the lever 16 causes the lever 16 to pivot about pivotal connection 20. This, in turn, causes lever end 56 to point downwardly, contacting the upper end 58 of the push rod 62 and thereby driving the push rod axially downwardly. In one embodiment (FIGS. 8A,8B) the lever 16 can include legs 74 depending from the end 18. The legs 74 cooperate with the housing 12 to limit the stroke of the lever 16.

As best shown in FIGURE 6, the latch 64 can be urged to its latched position wherein the latch 64 locks the battery pack 10 within its power device (e.g., to the vacuum cleaner 40 or vacuum cleaner housing 42). Specifically, the latch 64 is urged by a biasing element, such as spring 66, toward the latched position. Axial movement of the push rod 62, however, can force the latch 64 toward its unlatched position by overcoming the urging of the biasing element 66. In particular, an engagement between the push rod 62 and the latch 64 can cause the latch 64 to move to the unlatched position (shown in FIGURE 7B) from the latched position (shown in FIGURE 7A) when the push rod 62 is sufficiently axially moved (i.e., fully stroked) by the lever 16.

As shown in the illustrated embodiments, axial movement of the push rod 62 occurs along a first axis and movement of the latch 64 between the latched position and the unlatched position occurs along a second axis. The second axis can be oriented approximately normal relative to the first axis. As best shown in FIGURE 6, the engagement between the push rod 62 and the latch 64 can be a tapered engagement which translates movement of the push rod 62 along the first axis to movement of the latch 64 along the second axis. To create this tapered engagement, the push rod 62 can include a tapered portion 68 that engages a cooperating tapered portion 70 of the latch 64 upon axial movement of the push rod 62 to thereby move the latch 64 from its latched position to the unlatched position.

The first position of the push rod 62 (shown in FIGURES 7A and 9A) can be referred to as a retracted position and the second position of the push rod 62 (shown in FIGURES 7B and 9B) can be referred to as a protruding position. Thus, the push rod 62 is movable between a first retracted position and a second protruding position. In the first retracted position, the push rod 62 is retracted within the housing 12 (i.e., it does not protrude from the housing 12). In the second protruding position, the push rod 62 extends from the battery pack housing 12 through aperture 76 defined in the underside 28 of the housing 12 for ejecting the housing 12 from an associated device in which the housing is received for powering thereof. Also, as already mentioned, movement of the push rod 62 from the first retracted position to the second protruding position moves the latch 64 from the latched position to the unlatched position.

The push rod 62 can be urged toward its first retracted position by a biasing element, such as the illustrated spring 72 (only schematically illustrated in FIGURES 4 and 5). Thus, when the end 18 of the lever 16 is pulled, the push rod 62 is driven axially downward to move the latch 64, against the bias of the spring, from its latched position inward into the housing 12 to its unlatched position. More specifically, a full stroke of the lever 16 causes the push rod 62 to move the latch 64 to the unlatched position and further causes the push rod 62 to protrude from the battery pack housing 12, which can be used to assist in the ejection of the battery pack housing 12 from the housing of the powered device in which the battery pack is received (e.g., vacuum cleaner housing 42).

By the foregoing arrangement, a method for removing a battery pack from a powered device can be described. First, the lever 16 that is pivotally mounted on the battery pack 10 can be pulled. Pulling up one end of the lever 16 causes the other end to push down on the push rod 62, causing it to axially advance. Such axial advancement occurs as a result of the push rod 62 being slidably disposed on the battery pack 10 and mechanically arranged such that a rotating movement of the lever 16 is translated into axial movement of the push rod 62. The advancing of the push rod 62, as already described, causes the latch 64 to retract. Retraction of the latch 64 results from the latch being slidably disposed on the battery pack 10 and the tapered engagement between the push rod 62 and the latch 64. In the unlatched position, the latch 64 allows the battery pack 10 to be removed from its powered device. The battery pack 10 can also be ejected from its powered device via the push rod 62 protruding from the battery pack 10 upon axial advancement thereof.

Although in the illustrated embodiment, only a single latch 64 is illustrated, it will be appreciated by those with skill in the art that any number of latches 64 can be provided along the push rod 62 and within the housing 12 of the battery pack such that axial movement of the push rod 62 could slidably move any number of latches from respective latched positions to unlatched positions upon sufficient axial movement of the push rod. Also, it should be appreciated that installation of the battery pack 10 into a powered device can operate to force the one or more latches (e.g., latch 64) inward against their respective biasing elements allowing the battery pack to be removably secured to a powered device. The configuration of the device and/or the latches can then allow the latches to be returned to their latched positions by the biasing mechanism when the battery pack is fully installed.

## Claims

1. A latching assembly for securing a battery package to an electrically powered cleaning device, comprising: at least one moveable first engagement member (64), located toward a first side of a long end of the battery package (10) and configured for movement between an engaged position to thereby secure the battery package (10) to a cleaning device and an unengaged position for removal of the battery package (10) from a cleaning device; and
at least one user contact (16) movably mounted to the battery package (10) for movement of the first engagement member between the engaged position and the unengaged position;
**characterised by** at least one rod (62) having a longitudinal axis movably mounted to the battery package (10) to interface with the first engagement member (64); wherein
the user contact (16) is located toward a second side of the long end of the battery package (10) opposite the first side; and
the user contact (16) is configured to interface with the rod (62) for movement of the rod (62) to move the first engagement member (64) between the engaged position and the unengaged position.

2. The latching assembly of Claim 1, wherein rod (62) is configured for axial movement to retract the first engagement member (64) to enable the battery package (10) to be removed from a cleaning device; and/or
wherein the first engagement member (64) is a latch to secure to the battery package (10) to another engagement member on a cleaning device which is a catch; and/or
wherein the battery package (10) has a housing (12) with a top, bottom, and at least one side to substantially enclose a plurality of batteries (14) and has an electrical connection (24, 26) for the batteries (14) to connect with an electrical connection in a cleaning device.

3. The latching assembly of Claim 1, wherein the rod (62) movement occurs along a first axis and the movement of the first engagement member (64) moves to an unlatched position along a second different axis.

4. The latching assembly of Claim 3, wherein the second axis is oriented normal to the first axis; and/or
wherein the rod (62) has a tapered engagement section (68) between the rod (62) and the engagement member (64) to translate movement of the rod (62) along the first axis to movement of the engagement member (64) along the second axis.

5. The latching assembly of Claim 1, which includes at least one biasing member (66) arranged to bias the first engagement member (64) to protrude from the battery package (10) to engage a respective other engagement member on a cleaning device to thereby secure the battery package (10) to a cleaning device.

6. A latching assembly according to Claim 5, wherein the biasing member (66) is a coiled spring.

7. The latching assembly of Claim 5, wherein the first engagement member (64) is configured for movement between the latched position which is protruding and the unlatched position which is retracted.

8. The latching assembly of Claim 7, wherein the rod (62) has a retracted position and protruding position whereby the rod (62) acts against the biasing member (66) to retract the engagement member (64) and protrudes through an aperture (76) at bottom of battery package (10) to eject package from a cleaning device.

9. The latching assembly of Claim 8, which includes a second biasing member (72) which is associated with the rod (62) to urge the rod (62) to the first retracted position; and
wherein the biasing member (72) may optionally be a coiled spring.

10. The latching assembly of Claim 1, wherein the user contact (16) is a lever pivotably mounted to the battery package (10) for movable association with the rod (62) for movement of the lever (16) from a first position to a second position to actuate the first engagement member (64) between a latched position and an unlatched position.

11. The latching assembly of Claim 10, wherein the lever (16) is configured to move from the first position to the second position through an angle from greater than 1 to less than 180 degrees; or wherein the lever (16) is pivotally mounted to the battery package (10), the pivot point (20) located between an end (18) for user contact and the moving association to the rod (62).

12. The latching assembly of Claim 1, wherein the battery package (10) has at least two opposing matched shells (12a, 12b) that mate to form a housing (12) having front and rear faces, sides, top and bottom ends.

13. The latching assembly of Claim 12, wherein the housing (12) has a longitudinal cavity along a longitudinal side wherein rod (62) is slidably mounted and has a cavity substantially normal to the vertical along a bottom portion of the housing in which the engagement member (64) with a distal and proximal contact part is slidably mounted and wherein each cavity has an aperture in the same corner of the housing for protruding of the engagement member (64) and the rod (62).

14. An electrical combination comprising:
an electrically powered cleaner (40) including a body (42) with a nozzle (44, 48), and a suction motor fan assembly supported by the body (42) for fluid communication of at least the fan with the nozzle; and
a removable battery package (10) selectively engagable with the body (42) and electrically connectable with the motor such that the battery selectively supplies power to the motor; and
a latching assembly according to any preceding claim.

15. An electrically powered cleaning kit with rechargeable battery, comprising:
at least one dc powered cleaning device (40) having a body (42) with a nozzle (44, 48), a suction motor fan assembly supported by the body (42), where at least the fan is in fluid communication with the nozzle and the body (42) has a battery package receiving opening;
a rechargeable battery package (10) having a plurality of batteries with an electrical connection at the end for placement in the opening and a latching assembly according to any one of claims 1 to 13 for securing the battery package to an electrically powered cleaning device;
further comprising:
an electrical connection (24, 26) on the portion of the longitudinal end of the battery package (10) that has the engagement member (64); and
a battery charger (32) with a battery package receiving opening wherein opening for both the cleaning device and charger has at least one of a bottom and side having an electrical connection which mates with the electrical connection (24, 26) of the rechargeable removable battery package (10) when the battery is placed in either opening.

## Patentansprüche

1. Verriegelungsbaugruppe zum Sichern einer Batteriepackung an einer elektrisch betriebenen Reinigungsvorrichtung, die Folgendes umfasst: wenigstens ein bewegliches erstes Eingriffselement (64), das sich nahe einer ersten Seite eines langen Endes der Batteriepackung (10) befindet und für eine Bewegung zwischen einer Eingriffsposition zum Sichern der Batteriepackung (10) an einer Reinigungsvorrichtung und einer Nichteingriffsposition zum Entfernen der Batteriepackung (10) von einer Reinigungsvorrichtung konfiguriert ist; und
wenigstens einen Benutzerkontakt (16), der beweglich an der Batteriepackung (10) für eine Bewegung des ersten Eingriffselements zwischen der Eingriffsposition und der Nichteingriffsposition montiert ist;
**gekennzeichnet durch** wenigstens einen Stab (62) mit einer Längsachse, die beweglich an der Batteriepackung (10) montiert ist, um mit dem ersten Eingriffselement (64) in Verbindung zu kommen; wobei
der Benutzerkontakt (16) sich nahe einer zweiten Seite des langen Endes der Batteriepackung (10) gegenüber der ersten Seite befindet; und
der Benutzerkontakt (16) zum Koppeln mit dem Stab (62) für eine Bewegung des Stabs (62) konfiguriert ist, um das erste Eingriffselement (64) zwischen der Eingriffsposition und der Nichteingriffsposition zu bewegen.

2. Verriegelungsbaugruppe nach Anspruch 1, wobei der Stab (62) für eine axiale Bewegung zum Zurückziehen des ersten Eingriffselements (64) konfiguriert ist, um es zu ermöglichen, dass die Batteriepackung (10) von einer Reinigungsvorrichtung entfernt wird; und/oder
wobei das erste Eingriffselement (64) ein Riegel zum Sichern der Batteriepackung (10) an einem anderen Eingriffselement an einer Reinigungsvorrichtung ist, die eine Falle ist; und/oder
wobei die Batteriepackung (10) ein Gehäuse (12) mit einer Decke, einem Boden und wenigstens einer Seite hat, um mehrere Batterien (14) im Wesentlichen zu umschließen, und eine elektrische Verbindung (24, 26) für die Batterien (14) zum Verbinden mit einer elektrischen Verbindung in einer Reinigungsvorrichtung hat.

3. Verriegelungsbaugruppe nach Anspruch 1, wobei die Bewegung des Stabs (62) entlang einer festen Achse erfolgt und die Bewegung des ersten Eingriffselements (64) in eine unverriegelte Position entlang einer zweiten, anderen Achse geht.

4. Verriegelungsbaugruppe nach Anspruch 3, wobei die zweite Achse normal zu der ersten Achse orientiert ist; und/oder
wobei der Stab (62) einen kegeligen Eingriffsabschnitt (68) zwischen dem Stab (62) und dem Eingriffselement (64) hat, um eine Bewegung des Stabs (62) entlang der ersten Achse in eine Bewegung des Eingriffselements (64) entlang der zweiten Achse umzusetzen.

5. Verriegelungsbaugruppe nach Anspruch 1, die wenigstens ein Vorspannelement (66) aufweist, das zum Vorspannen des ersten Eingriffselements (64) ausgelegt ist, so dass es von der Batteriepackung (10) vorsteht und in ein jeweiliges anderes Eingriffselement an einer Reinigungsvorrichtung eingreift, um dadurch die Batteriepackung (10) an einer Reinigungsvorrichtung zu sichern.

6. Verriegelungsbaugruppe nach Anspruch 5, wobei das Vorspannelement (66) eine Spiralfeder ist.

7. Verriegelungsbaugruppe nach Anspruch 5, wobei das erste Eingriffselement (64) für eine Bewegung zwischen der verriegelten Position, die vorstehend ist, und der unverriegelten Position, die zurückgesetzt ist, konfiguriert ist.

8. Verriegelungsbaugruppe nach Anspruch 7, wobei der Stab (62) eine zurückgezogene Position und eine vorstehende Position hat, so dass der Stab (62) gegen das Vorspannelement (66) wirkt, um das Eingriffselement (64) zurückzuziehen, und durch eine Öffnung (76) am Boden der Batteriepackung (10) vorsteht, um die Packung aus einer Reinigungsvorrichtung auszustoßen.

9. Verriegelungsbaugruppe nach Anspruch 8, die ein mit dem Stab (62) assoziiertes zweites Vorspannelement (72) aufweist, um den Stab (62) in die erste zurückgezogene Position zu drängen; und
wobei das Vorspannelement (72) optional eine Spiralfeder sein kann.

10. Verriegelungsbaugruppe nach Anspruch 1, wobei der Benutzerkontakt (16) ein Hebel ist, der schwenkbar an der Batteriepackung (10) für eine bewegliche Assoziation mit dem Stab (62) für eine Bewegung des Hebels (16) von einer ersten Position in eine zweite Position montiert ist, um das erste Eingriffselement (64) zwischen einer verriegelten Position und einer unverriegelten Position zu betätigen.

11. Verriegelungsbaugruppe nach Anspruch 10, wobei der Hebel (16) zum Bewegen von der ersten Position in die zweite Position durch einen Winkel von mehr als 1 bis weniger als 180 Grad konfiguriert ist; oder wobei der Hebel (16) schwenkbar an der Batteriepackung (10) montiert ist, wobei sich der Schwenkpunkt (20) zwischen einem Ende (18) für den Benutzerkontakt und der Bewegungsassoziation mit dem Stab (62) befindet.

12. Verriegelungsbaugruppe nach Anspruch 1, wobei die Batteriepackung (10) wenigstens zwei gegenüberliegende zueinander passende Schalen (12a, 12b) hat, die zusammenpassen, um ein Gehäuse (12) mit einer Front- und Rückfläche, Seiten, oberen und unteren Enden zu bilden.

13. Verriegelungsbaugruppe nach Anspruch 12, wobei das Gehäuse (12) einen longitudinalen Hohlraum entlang einer longitudinalen Seite hat, wobei der Stab (62) gleitend montiert ist und einen Hohlraum im Wesentlichen normal zur Vertikalen entlang einem Bodenteil des Gehäuses hat, in dem das Eingriffselement (64) mit einem distalen und einem proximalen Kontaktteil gleitend montiert ist und wobei jeder Hohlraum eine Öffnung in derselben Ecke des Gehäuses hat, durch die das Eingriffselement (64) und der Stab (62) vorstehen.

14. Elektrische Kombination, die Folgendes umfasst:
einen elektrisch betriebenen Reiniger (40), der einen Körper (62) mit einer Düse (44, 48) und eine von dem Körper (42) getragene Saugmotorgebläsebaugruppe für eine Fluidverbindung wenigstens des Gebläses mit der Düse aufweist; und
eine entfernbare Batteriepackung (10), die selektiv mit dem Körper (42) in Eingriff gebracht und elektrisch mit dem Motor verbunden werden kann, so dass die Batterie den Motor selektiv mit Strom speist; und
eine Verriegelungsbaugruppe nach einem vorherigen Anspruch.

15. Elektrisch betriebener Reinigungssatz mit aufladbarer Batterie, der Folgendes umfasst:
wenigstens eine gleichstromgespeiste Reinigungsvorrichtung (40), die einen Körper (42) mit einer Düse (44, 48) und eine von dem Körper (42) getragene Saugmotorgebläsebaugruppe beinhaltet, wobei wenigstens das Gebläse in Fluidverbindung mit der Düse ist und der Körper (42) eine Batteriepackungsaufnahmeöffnung hat;
eine wiederaufladbare Batteriepackung (10) mit mehreren Batterien mit einer elektrischen Verbindung am Ende zum Platzieren in der Öffnung und einer Verriegelungsbaugruppe nach einem der Ansprüche 1 bis 13 zum Sichern der Batteriepackung an einer elektrisch betriebenen Reinigungsvorrichtung;
der ferner Folgendes umfasst:
eine elektrische Verbindung (24, 26) an dem Teil des longitudinalen Endes der Batteriepackung (10), der das Eingriffselement (64) hat; und
ein Batterieladegerät (32) mit eine Batteriepackungsaufnahmeöffnung, wobei die Öffnung sowohl für die Reinigungsvorrichtung als auch für das Ladegerät einen Boden und/oder eine Seite mit einer elektrischen Verbindung hat, die zu der elektrischen Verbindung (24, 26) der wiederaufladbaren entfernbaren Batteriepackung (10) passt, wenn die Batterie in einer der Öffnungen platziert wird.

## Revendications

1. Assemblage de verrouillage pour fixer un bloc-batteries sur un dispositif de nettoyage à commande électrique, comprenant au moins un premier élément d'engagement mobile (64) agencé vers un premier côté d'une extrémité longue du bloc-batteries (10) et destiné à se déplacer entre une position engagée, pour fixer ainsi le bloc-batteries (10) à un dispositif de nettoyage, et une position dégagée, pour retirer le bloc-batteries (10) d'un dispositif de nettoyage ; et
au moins un contact utilisateur (16), monté de manière mobile sur le bloc-batteries (10), pour déplacer le premier élément d'engagement entre la position engagée et la position dégagée ; **caractérisé par** au moins une tige (62), comportant un axe longitudinal monté de manière mobile sur le bloc-batteries (10) en vue d'une liaison avec le premier élément d'engagement (64) ; dans lequel :
le contact utilisateur (16) est agencé vers un deuxième côté de l'extrémité longue du bloc-batteries (10) opposé au premier côté ; et
le contact utilisateur (16) est destiné à être relié à la tige (62), pour déplacer la tige (62) en vue de déplacer le premier élément d'engagement (64) entre la position engagée et la position dégagée.

2. Assemblage de verrouillage selon la revendication 1, dans lequel la tige (62) est configurée pour un déplacement axial, pour rétracter le premier élément d'engagement (64) afin de permettre le retrait du bloc-batteries (10) d'un dispositif de nettoyage ; et/ou
dans lequel le premier élément d'engagement (64) est un verrou servant à fixer le bloc-batteries (10) sur un autre élément d'engagement sur un dispositif de nettoyage, constitué par un cliquet ; et/ou
dans lequel le bloc-batteries (10) comporte un logement (12), avec une partie supérieure, une partie inférieure et au moins un côté, pour renfermer pour l'essentiel plusieurs batteries (14), et comporte un connecteur électrique (24, 26) pour les batteries (14), pour les connecter à une connexion électrique dans un dispositif de nettoyage.

3. Assemblage de verrouillage selon la revendication 1, dans lequel le déplacement de la tige (62) se fait le long d'un premier axe, le déplacement du premier élément d'engagement (64) se faisant vers une position déverrouillée le long d'un deuxième axe différent.

4. Assemblage de verrouillage selon la revendication 3, dans lequel le deuxième axe est orienté perpendiculairement au premier axe ; et/ou
dans lequel la tige (62) comporte une section d'engagement effilée (68) entre la tige (62) et l'élément d'engagement (46) pour convertir le déplacement de la tige (62) le long du premier axe en un déplacement de l'élément d'engagement (64) le long du deuxième axe.

5. Assemblage de verrouillage selon la revendication 1, englobant au moins un élément poussoir (66), destiné à exercer une poussée sur le premier élément d'engagement (64) pour qu'il déborde du bloc-batteries (10) en vue d'un engagement dans un autre élément d'engagement sur un dispositif de nettoyage, pour fixer ainsi le bloc-batteries (10) sur un dispositif de nettoyage.

6. Assemblage de verrouillage selon la revendication 5, dans lequel l'élément poussoir (66) est un ressort enroulé.

7. Assemblage de verrouillage selon la revendication 5, dans lequel le premier élément d'engagement (64) est destiné à se déplacer entre la position verrouillée, en saillie, et la position déverrouillée, qui est rétractée.

8. Assemblage de verrouillage selon la revendication 7, dans lequel la tige (62) comporte une position rétractée et une position en saillie, la tige (62) agissant ainsi contre l'élément poussoir (66) pour rétracter l'élément d'engagement (64), et déborde à travers une ouverture (76) au niveau de la partie inférieure du bloc-batteries (10) pour éjecter le bloc d'un dispositif de nettoyage.

9. Assemblage de verrouillage selon la revendication 8, englobant un deuxième élément poussoir (72) associé à la tige (62) pour pousser la tige (62) vers la première position rétractée ; et
dans lequel l'élément poussoir (72) peut optionnellement être un ressort enroulé.

10. Assemblage de verrouillage selon la revendication 1, dans lequel le contact utilisateur (16) est un levier monté de manière pivotante sur le bloc-batteries (10) en vue d'une association mobile avec la tige (62), pour déplacer le levier (16) d'une première position vers une deuxième position, afin de déplacer le premier élément d'engagement (64) entre une position verrouillée et une position déverrouillée.

11. Assemblage de verrouillage selon la revendication 10, dans lequel le levier (16) est destiné à se déplacer de la première position vers la deuxième position à travers un angle compris entre une valeur supérieure à 1 et inférieure à 180 degrés, ou dans lequel le levier (16) est monté de manière pivotante sur le bloc-batteries (10), le point de pivotement (20) étant situé entre une extrémité (18) du contact utilisateur et l'association mobile à la tige (62).

12. Assemblage de verrouillage selon la revendication 1, dans lequel le bloc-batteries (10) comporte au moins deux coques accouplées opposées (12a, 12b), accouplées pour former un logement (12) comportant des faces avant et arrière, des côtés et des extrémités supérieure et inférieure.

13. Assemblage de verrouillage selon la revendication 12, dans lequel le logement (12) comporte une cavité longitudinale le long d'un côté longitudinal, dans laquelle la tige (62) est montée de manière coulissante, et comporte une cavité essentiellement perpendiculaire à la verticale le long d'une partie inférieure du logement, dans lequel est monté de manière coulissante l'élément d'engagement (64), avec une partie de contact distale et proximale, et dans lequel chaque cavité comporte une ouverture dans le même coin du logement, pour faire déborder l'élément d'engagement (64) et la tige (62).

14. Combinaison électrique, comprenant :
un dispositif de nettoyage à commande électrique (40), englobant un corps (42) avec une buse (44, 48) et un assemblage de moteur-ventilateur d'aspiration supporté par le corps (42) pour établir une communication de fluide, au moins entre le ventilateur et la buse ; et
un bloc-batteries amovible (10), pouvant être engagé sélectivement dans le corps (42) et pouvant être connecté électriquement au moteur de sorte que la batterie alimente sélectivement le moteur ; et
un assemblage de verrouillage selon l'une quelconque des revendications précédentes.

15. Kit de nettoyage à commande électrique comportant une batterie rechargeable, comprenant :
au moins un dispositif de nettoyage à courant continu (40), comportant un corps (42) avec une buse (44, 48) et un assemblage moteur-ventilateur d'aspiration supporté par le corps (42), au moins le ventilateur étant en communication de fluide avec la buse, et le corps (42) comportant une ouverture de réception du bloc-batteries ;
un bloc-batteries rechargeable (10), comportant plusieurs batteries avec une connexion électrique au niveau de l'extrémité en vue du positionnement dans l'ouverture, et un assemblage de verrouillage selon l'une quelconque des revendications 1 à 13 pour fixer le bloc-batteries sur un dispositif de nettoyage à commande électrique ;
comprenant en outre :
une connexion électrique (24, 26) sur la partie de l'extrémité longitudinale du bloc-batteries (10) qui comporte l'élément d'engagement (64) ; et
un chargeur de batterie (32) avec une ouverture de réception du bloc-batteries, l'ouverture pour le dispositif de nettoyage et le chargeur comportant au moins un élément, un fond ou un côté, comportant une connexion électrique accouplée à la connexion électrique (24, 26) du bloc-batteries rechargeable amovible (10) lorsque la batterie est placée dans une des ouvertures.
